# EUROPEAN PATENT APPLICATION

(11) **EP 4 502 691 A1**
(43) Date of publication of application: **05.02.2025**
(21) Application number: 23189531.9
(22) Date of filing: 03.08.2023
(51) Int. Cl.: G02B 6/44

(54) **FIBER OPTIC OUTLET**

(71) Applicant: Corning Research and Development Corporation, Corning, NY 14831 (US)
(72) Inventor: Ozarek, Dawid Dariusz, Hickory NC, 28601 (US); Ruda, Michal, Hickory NC, 28601 (US); Cieslak, Adam, Hickory NC, 28601 (US)
(74) Representative: Reddie & Grose LLP

(57) **Abstract**

A fiber optic outlet (100) is disclosed. The fiber optic outlet (100) comprises a base portion (101) for mounting the fiber optic outlet (100); a fiber optic splice tray (103) pivotably attached to the base portion (101) and comprising one or more splice tray retaining features (141); and a lid (105) pivotably attached to the base portion (101) and comprising one or more lid retaining features (145). The splice tray (103) and the lid (105) are coaxially attached to the base portion (101), and the one or more splice tray retaining features (141) and the one or more lid retaining features (145) are configured to releasably retain the fiber optic splice tray (103) against the lid (105) such that, in use, when the lid (105) is pivoted relative to the base portion (101) the fiber optic splice tray (103) is also pivoted relative to the base portion (101). A corresponding fiber optic splice tray (103) and lid (105) are also provided.

## Description

### TECHNICAL FIELD

This disclosure relates to the field of apparatuses for fiber optic networks. In particular, the technology of the disclosure relates to fiber optic outlets for managing and distributing fiber optic cables as well as corresponding components thereof.

### BACKGROUND

Fiber optic networks allow information to be transmitted via optical signals transmitted through special glass cables known as optical fibers. Compared with traditional copper wiring, optical fibers allow transmission over greater distances with substantially less signal loss, provide a greater bandwidth, and do not suffer from electrical interference. Fiber optic networks are particularly useful when providing long-distance communication and high bandwidth, so called "super-fast", broadband internet.

To maximise the benefits of fiber optic networks, optical fibers are preferably used for as much of the network as possible. In particular, many network operators are increasingly deploying fiber to the home (FTTH) networks. There is a constant and rapid development of FTTH markets worldwide, in particular in the years since the COVID-19 pandemic increasing the prevalence of home working around the world. There is a broad market need for FTTH networks, of which fiber optic outlets (e.g., wall terminals) installed in flats and houses are a crucial part. Fiber optic outlets are widely used in the fiber to the 'X' (FTTX) part of the network and are installed directly in the end customer location. In greenfield sites, wall outlets are often integrated with other structural elements directly in the walls. However for brownfield sites, fiber optic outlets often need to be applied externally

Fiber optic outlets often comprise a number of fiber optic components, such as connections and splices which must be kept safe and secure within the fiber optic outlet. However, typically, when a fiber optic outlet is accessed, the fiber optic components therein, such as fiber optic splices, are exposed and liable to damage. This can lead to increased costs for providers of fiber optic networks to replace or fix damage components, as well as a reduced satisfaction for users of a fiber optic network due to degraded service.

Embodiments of the present invention may address one or more of these problems, amongst others.

### SUMMARY OF INVENTION

The invention is defined in the independent claims, to which the reader is now directed. Preferred or advantageous features are set out in the dependent claims.

According to a first aspect of the invention, a fiber optic outlet is provided. The fiber optic outlet comprises a base portion for mounting the fiber optic outlet; a fiber optic splice tray pivotably attached to the base portion and comprising one or more splice tray retaining features; and a lid pivotably attached to the base portion and comprising one or more lid retaining features. The splice tray and the lid are coaxially attached to the base portion, and the one or more splice tray retaining features and the one or more lid retaining features are configured to releasably retain the fiber optic splice tray against the lid such that, in use, when the lid is pivoted relative to the base portion the fiber optic splice tray is also pivoted relative to the base portion.

By providing a fiber optic outlet having a fiber optic splice tray and lid coaxially mounted on the base, with the fiber optic splice tray releasably retained against the lid in this manner, fiber optic splices retained by the fiber optic splice tray can be better protected in use. This is because the fiber optic splice tray is retained against, and pivots with, the lid of the fiber optic outlet when the lid is opened. This means that the fiber optic splices need only be exposed if access to them is actually required, whereas if access is only needed to other components within the fiber optic outlet then the fiber optic splices remain protected by the lid.

Optionally, the one or more splice tray retaining features comprise one or more slots and the one or more lid retaining features comprises one or more latches. Alternatively, the one or more splice tray retaining features comprise one or more latches and the one or more lid retaining features comprises one or more slots. As another alternative, the splice tray retaining features and the lid retaining features each comprise a combination of slots and latches.

Having retaining features comprising slots, latches or a combination thereof on the fiber optic splice tray and the lid enables the splice tray to be repeatedly attached and detached from the lid when in use. This enables the fiber optic splices retained by the fiber optic splice tray to be accessed as and when needed, whilst otherwise remaining protected by the lid.

Optionally, the one or more splice tray retaining features and the one or more lid retaining features each consist of two respective retaining features.

Providing two splice tray retaining features, for example, at two ends of an edge opposite to the splice tray hinge of the splice tray body, and two lid retaining features, for example, on opposite sides of the lid, means that the fiber optic splice tray can be securely retained against the lid when in use, whilst not unduly impeding access to fiber optic splices on the splice tray when needed.

Optionally, the fiber optic splice tray comprises a splice tray body having a first side and a second side, the first side comprising a splice region for retaining one or more fiber optic splices. In this case, the lid preferably releasably retains the fiber optic splice tray against the lid such that the first side of the splice tray body faces the lid

In this manner, the fiber optic splices can be protected by the lid as the fiber optic splice tray is configured such that it can be retained against the lid with the first side, comprising the splice region, against the lid. The second side, opposite the first, is, therefore, the side exposed when the lid is opened by pivoting it about the hinge.

Optionally, the splice tray body further comprises one or more optical fiber overlength storage regions for retaining excess optical fiber. Preferably the one or more optical fiber overlength storage regions are disposed on the first side of the splice tray body.

Providing optical fiber overlength storage regions on the fiber optic splice tray means that the optical fibers and splices can be kept neatly and tidily organised on the splice tray. In particular, providing the optical fiber overlength storage regions on the first side of the splice tray body means that the overlength fiber is stored facing the lid (and retained against the lid when the lid is opened), helping to protect the optical fibers.

Optionally, the splice tray body further comprises one or more guide channels configured to guide optical fibers from the base portion onto the first side of the splice tray.

Providing one or more guide channels ensure that the optical fibers are guided onto the splice tray from the base portion of the fiber optic outlet in a safe manner (i.e., with an acceptable radius of curvature) so as to not break or become damaged as the splice tray is pivoted in relation to the base portion.

Optionally, the splice tray is attached to the base portion via a splice tray hinge. In this case, the guide channels are preferably configured such that, in use, optical fibers are guided from the base portion onto the first side of the splice tray at a location proximal to the splice tray hinge and in a direction parallel to the splice tray hinge. In some embodiments, the hinge has a hollow portion such that optical fibers are guided from the base portion onto the first side of the splice tray passing through the hollow portion of the hinge along the axis of the hinge.

Locating the guide channels proximal to the splice tray hinge means that, when in use, as the splice tray pivots about the hinge, the guide channels will undergo minimal movement with respect to the base portion. This means that the optical fibers passing from the base portion to the optical fiber splice tray via the guide portions will undergo minimal strain. By having the guide channels in a direction parallel to the splice tray hinge, the radius of curvature of the optical fibers will not be changed as the fiber optic splice tray is pivoted, in use, relative to the base potion, again reducing the strain put on the optical fibers. Passing the optical fibers through the hinge along the axis of the hinge will minimise the strain on the optical fibers as they are passed from the base portion to the optical fiber splice tray.

Optionally, the base portion comprises one or more fiber optic cable entry regions, the one or more fiber optic cable entry regions comprising one or more duct cable fixings and/or one or more fiber optic connector adapters. If a duct cable fixing is included in the fiber optic cable entry region(s), then preferably the one or more duct cable fixings are detachable from the base portion.

Providing a duct cable fixing and/or more or more fiber optic connector adapters provides for a number of different options for passing optical fibers into or out of the base portion. Having a removable duct cable fixing means that if this fixing is not needed it can be removed, reducing the space used by the base portion. In some cases, this may enable more fiber optic connector adapters to be accessed.

Optionally, the lid body is configured to extend beyond the base portion in a direction such that, when in use, the lid covers one or more fiber optic connections passing through a fiber optic cable entry region of the base portion.

In this manner, the lid can provide protection not only to the fiber optic components within the base portion of the fiber optic outlet, but also to external components, such as fiber optic connectors that are connected to an adapter in a wall of the base portion.

According to a second aspect of the invention, a fiber optic splice tray for use in a fiber optic outlet comprising a base portion and a lid pivotably mounted on the base portion is provided. The fiber optic splice tray comprises a splice tray hinge for pivotably mounting the fiber optic splice tray onto the base portion coaxially with the lid; and one or more splice tray retaining features for cooperating with a corresponding one or more lid retaining features of the lid to releasably retain the fiber optic splice tray against the lid such that, in use, when the lid is pivoted relative to the base portion the fiber optic splice tray is also pivoted relative to the base portion.

According to a third aspect of the invention, a lid for use in a fiber optic outlet comprising a base portion and a fiber optic splice tray pivotably mounted on the base portion is provided. The lid comprises a lid hinge for pivotably mounting the lid onto the base portion coaxially with the splice tray; and one or more lid retaining features for cooperating with a corresponding one or more splice tray retaining features of the fiber optic splice tray to releasably retain the fiber optic splice tray against the lid such that, in use, when the lid is pivoted relative to the base portion the fiber optic splice tray is also pivoted relative to the base portion.

Additional features and advantages will be set forth in the detailed description which follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The embodiments of the disclosure will be described with respect to the Figures, in which:
Figure 1 illustrates a fiber optic outlet according to aspects of the invention;
Figure 2 illustrates an exploded view of the fiber optic outlet of Figure 1;
Figure 3 illustrates a mount portion of a base of a fiber optic outlet according to aspects of the invention;
Figures 4A and 4B illustrate two views of a hinge portion of a base of a fiber optic outlet according to aspects of the invention;
Figure 5 illustrates a splice tray of a fiber optic outlet according to aspects of the invention;
Figures 6A and 6B illustrate two views of a lid of a fiber optic outlet according to aspects of the invention;
Figures 7A to 7C illustrate accessing a fiber optic outlet according to aspects of the invention;
Figures 8A and 8B illustrate another configuration of a fiber optic outlet according to aspects of the invention with the splice tray in a retained position.

Like components across different figures are represented by like reference numerals.

### DETAILED DESCRIPTION OF THE INVENTION

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

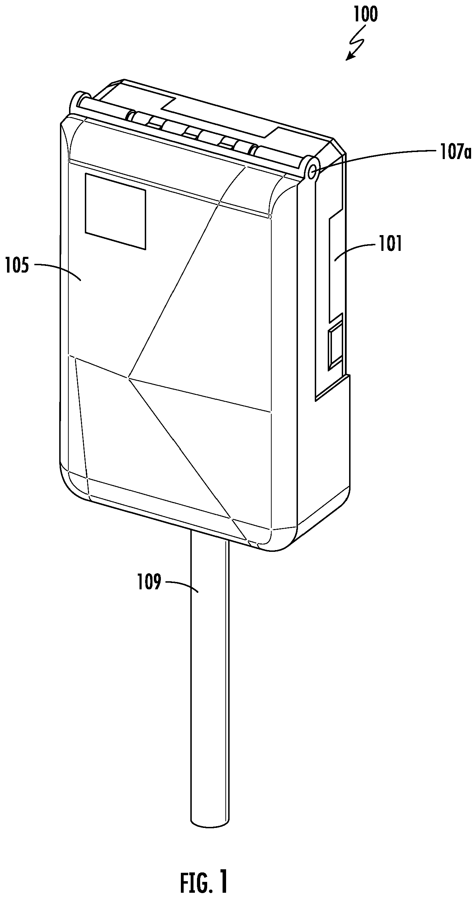

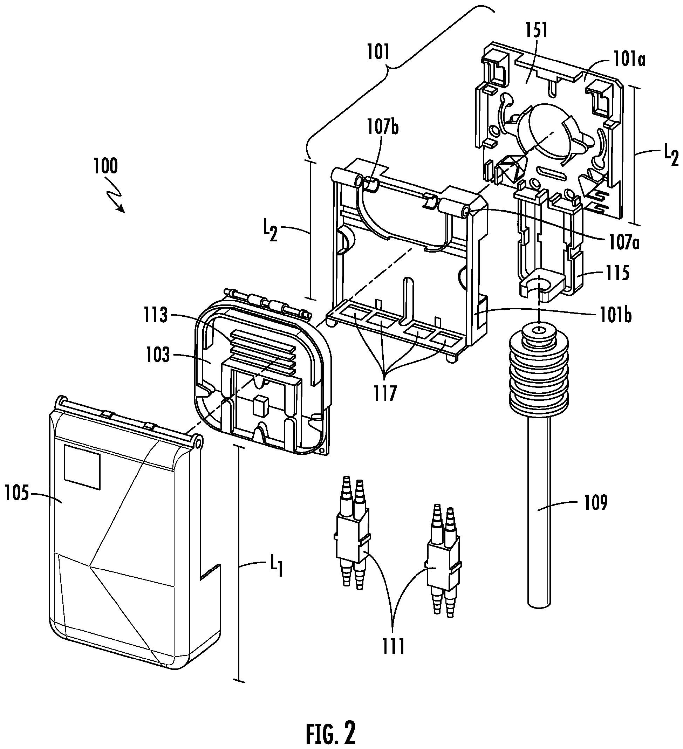

Figure 1 illustrates a fiber optic outlet 100. The fiber optic outlet 100 may be used as part of a fiber to the home (FTTH) fiber optic network, for example. It may be mounted via a base portion 101 on a wall of a building, such as a house, block of flats or other residential building, as well as commercial or other buildings. In particular, fiber optic outlet 100 may be used to house the connections between an incoming fiber optic cable comprising a plurality of optical fibers, e.g., through fiber optic duct 109, and a corresponding plurality of outgoing optical fibers for individual users (e.g., individual flats in a block of flats). Such connections are typically in the form of fiber optic splices, which are held on a fiber optic splice tray 103 (Figure 2) that is housed in a cavity formed by the base portion 101 and a lid 105 as discussed herein.

Figure 1 illustrates the fiber optic outlet 100 in a closed position, whereby the lid 105 and the base 101 meet so as to enclose the fiber optic splice tray 103 and prevent ingress of dirt, debris, etc. Lid 105 is connected to the base portion 101 via hinge 107a, which enables the lid 105 to be pivoted upwards in a direction away from fiber optic duct 109 to provide access to the interior of the fiber optic outlet 100 along with the splice tray 103 and various fiber optic components and fibers housed within fiber optic outlet 100.

Figure 2 provides an exploded view of fiber optic outlet 100. As shown, base portion 101 comprises two portions, a mount portion 101a that enables the fiber optic outlet 100 to be mounted on a wall (amongst other functions) and a hinge portion 101b that comprises hinge 107a to which lid 105 is mounted and hinge 107b to which the fiber optic splice tray 103 is mounted. Hinges 107a and 107b are coaxial. The mount portion 101a comprises a duct cable fixing 115 for retaining a fiber optic duct 109, through which fiber optic cables can enter the fiber optic outlet 100. The hinge portion 101b comprises four openings 117 for receiving fiber optic connector adapters 111, through which optical fiber connections can be made across the fiber optic outlet 100.

While the base portion 100 comprises two portions 101a, 101b as shown in Figure 2, it will be appreciated, that in some embodiments, the base portion 100 may comprise a unitary piece, or more than two pieces.

Fiber optic splice tray 103 can also be seen in the exploded view of fiber optic outlet 100 in Figure 2. Amongst other functions, fiber optic splice tray 103 comprises a splice region 113 for retaining a number of fiber optic splices. As can be seen, fiber optic splice tray 103 is covered by lid 105 when lid 105 is in a closed position.

As shown in Figure 2, lid 105 has a length L₁ that is longer than a length L₂ of the hinge portion 101b and of the mount portion 101a, excluding the duct cable fixing 115. In particular, lid 105 extends a length L₁ such that the lid 105 covers the duct cable fixing 115 and the openings 117 for receiving fiber optic connector adapters 111. In this configuration, lid 105 provides protection for these components, despite the components being external to the base portion 101.

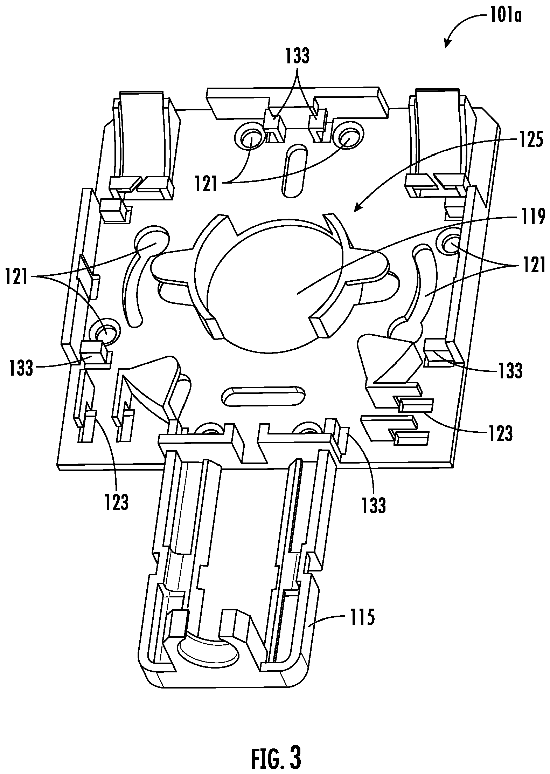

The base portion 101, the fiber optic splice tray 103, and the lid will now each be described in more detail with respect to Figure 3 to 6B.

Figure 3 illustrates the mount portion 101a of base portion 101. Mount portion 101a comprises a plurality of holes 121 that enable the fiber optic outlet 100 to be mounted on a wall (e.g., with screws). In particular, fiber optic outlet 100 can be mounted onto a mounting surface (e.g., a wall) by applying a fastener(s) (e.g., screws) through the plurality of holes 121 to couple mount portion 101a of fiber optic outlet 100 to the corresponding mounting surface (e.g., wall). An opening 119 is provided in the back of the mount portion 101a to enable entry of a fiber optic cable from the rear of the fiber optic outlet 100, such as from a cavity inside a wall over which the fiber optic outlet 100 is mounted, such as a from a flush-mounted box.

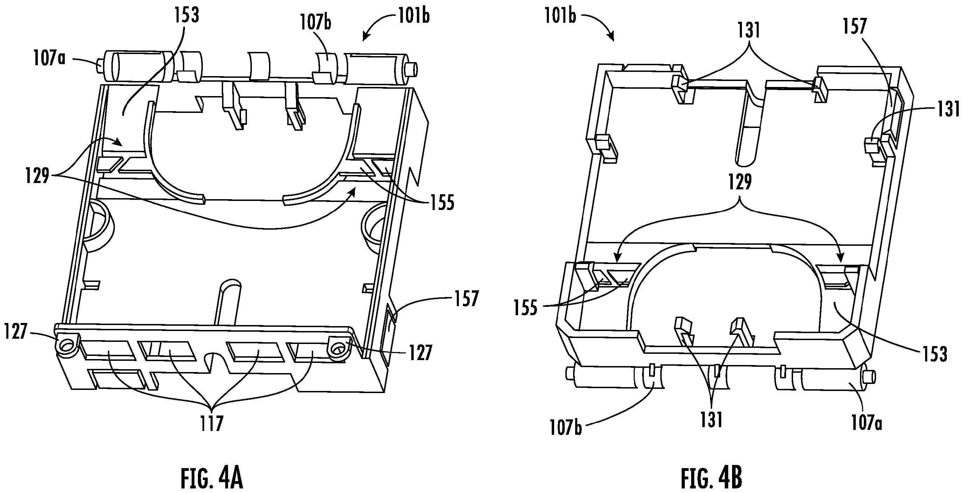

Mount portion 101a also comprises features 123 for retaining an incoming fiber optic cables using zip ties or similar retention means A duct cable fixing 115 provides a means for a fiber optic cable to enter the fiber optic outlet and is removably attached to the main body 151 of the mount portion 101a and is configured to be removable (in this case by snapping along a predefined line). This means that the duct cable fixing 115 can be removed when this type of cable entry is not required (e.g., when fiber optic connector adapters are used in slots 117 of the hinge portion, illustrated in Figure 4A and discussed further below), saving space and enabling more other connections to be used.

Once a fiber optic cable has entered the fiber optic outlet 100, mount portion 101a is provided with an overlength storage region 125 to enable excess lengths of fiber optic cable to be neatly and safely stored, without risk of damage to the fiber optic cables. As shown, overlength storage region 125 is configured such that excess lengths of fiber optic cable are oriented around opening 119.

To form base portion 101, the mount portion 101a is coupled or connected to the hinge portion 101b to form the base portion 100. In particular, the mount portion 101a comprises a plurality of latches 133 that are configured to cooperate with a corresponding plurality of latches 131 on the hinge portion 101b.

Figures 4A and 4B illustrate the hinge portion 101b from two perspectives. The hinge portion 101b comprises hinge 107a which is configured to coaxially receive the lid 105 and hinge 107b which is configured to coaxially receive the fiber optic splice tray 103 , each in a pivotable manner. Stated another way, hinge 107b couples to splice tray hinge 135 thereby pivotably coupling base portion 100 to fiber optic splice tray 103 and hinge 107a couples to lid hinge 143 thereby pivotably coupling base portion 100 to lid 105.

To provide an alternative or additional means to the duct cable entry for optical fibers to pass into or out of the fiber optic outlet 100, slots 117 are provided for receiving fiber optic connector adapters. These enable fiber optic connections to be made across the fiber optic outlet 100 between external and internal fiber optic cables. Additionally, removable wall portion 157 is provided that can be removed from the hinge portion 101b to enable fiber optic cables to enter and be retained on features 123, for example, using cable ties.

To help manage optical fibers passing between the base portion 101 and the fiber optic splice tray 103, hinge portion 101b is provided with cable management regions 129. These regions comprise protrusions 155 for helping retain optical fibers as well as ramps 153 for helping to guide optical fibers from the base portion 100 to the fiber optic splice tray 103.

To connect the hinge portion 101b to the mount portion 101a and form the base portion 100, mount portion 101a comprises a plurality of latches 133 configured to couple to a corresponding plurality of latches 131 on the hinge portion 101b. Hinge portion 101b also comprises slots 127 for receiving corresponding latching features on the lid 105 to releasably retain the lid 105 in a closed position (i.e., the position illustrated in Figure 1) against the base portion 100.

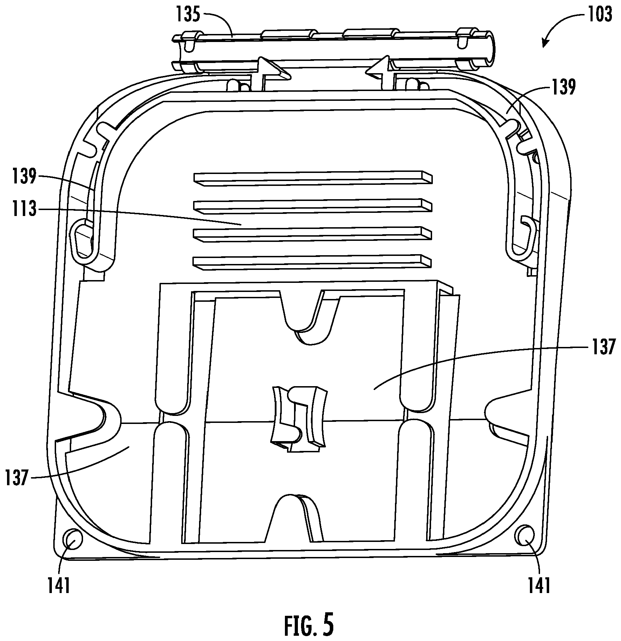

Figure 5 illustrates fiber optic splice tray 103. Fiber optic splice tray 103 comprises a splice tray hinge 135 that pivotably connects to hinge 107b on hinge portion 101b.

The fiber optic splice tray 103 comprises a splice region 113 which is configured to retain a plurality of fiber optic splices (though in some embodiments only a single fiber optic splice may be retained). In some embodiments, the splice region 113 is only provided on a single side (i.e. a first side) of the fiber optic splice tray 103. To help guide optical fibers from the base portion 101 and onto the fiber optic splice tray 103 (or vice versa) ensuring that the optical fibers will not be damaged (in particular that they are not bend beyond an acceptable radius of curvature for the optical fibers), guide channels 139 are provided. Guide channels 139 are configured such that, in use, optical fibers are guided from the base portion 101 onto the fiber optic splice tray 103 at a location proximal to the splice tray hinge 135 and in a direction parallel to the splice tray hinge 135. In particular, in the illustrated splice tray, splice tray hinge 135 is hollow (as is hinge 107b of the hinge portion 101b, as illustrated in Figure 4A) allowing optical fibers to pass from the base portion 101 to the fiber optic splice tray 103 passing along the axis of rotation of the splice tray hinge 135 and the hinge 107b of the base portion 101b. The guide channels 139 include a bend where the optical fibers are guided to the other regions of the fiber optic splice tray 103 while maintaining an acceptable radius of curvature. The guide channels 139 also comprise protrusions to help retain the optical fibers within the guide channels 139.

In particular, the guide channels 139 can guide optical fibers into optical fiber overlength storage regions 137 of fiber optic splice tray 103. As shown, in some embodiments, fiber optic splice tray 103 includes two overlength storage regions 137. However, it is within the scope of the present disclosure that an alternate number of overlength storage regions 137 may be used. Overlength storage regions 137 are provided for storing excess lengths of optical fibers both sides of a fiber optic splice.

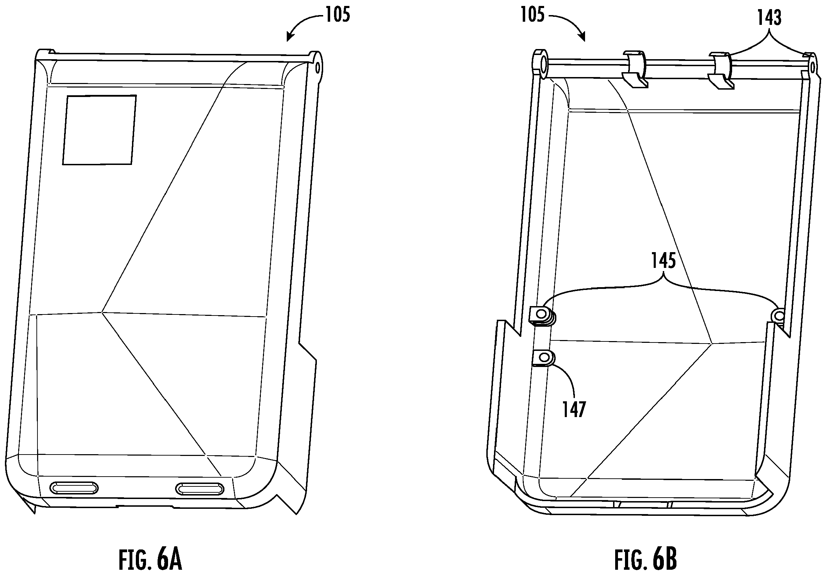

To enable the fiber optic splice tray 103 to be releasably retained against the lid 105, splice tray retaining features 141 are provided in the form of two slots. These are configured to cooperate with corresponding lid retaining features 145 on the lid 105 in the form of two latching components. The lid retaining features 145 of lid 105 can be seen in Figure 6B.

Figures 6A and 6B illustrate two views of lid 105. Lid 105 comprises lid hinge 143 that pivotably connects to hinge 107a of hinge portion 101b of the base portion 100. As noted above, lid retaining features 145 in the form of two latching components can be seen in Figure 6B. Also visible in Figure 6B is latch 147 (a second corresponding latch is hidden from view in Figure 6B). Latches 147 are configured to engage with slots 127 to releasably retain lid 105 in a closed position.

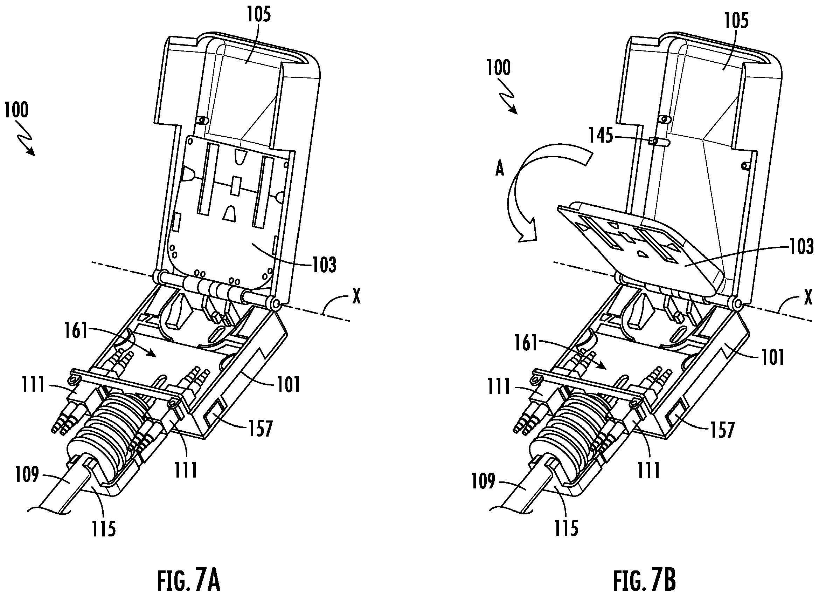

Figures 7A to 7C illustrate how the splice tray 103 of the fiber optic outlet 100 can be accessed. From a closed position (e.g., as illustrated in Figure 1), the lid 105 of the fiber optic outlet 100 can be opened by pivoting about axis of rotation X of hinges 107a and 107b. When the lid 105 is opened in this manner, fiber optic splice tray 103 is retained against the lid 105 as illustrated in Figure 7A. As can be seen, the first side of the fiber optic splice tray 103 (i.e., that has the splice region 113 on), remains covered by the lid 105 as the fiber optic splice tray 103 is retained against the lid 105. Therefore, opening lid 105 provides access to other components in the fiber optic outlet 100, such as fiber optic connector adapters 111 and components within region 161 inside the base portion 101, without exposing the fiber optic splices retained on the fiber optic splice tray 103.

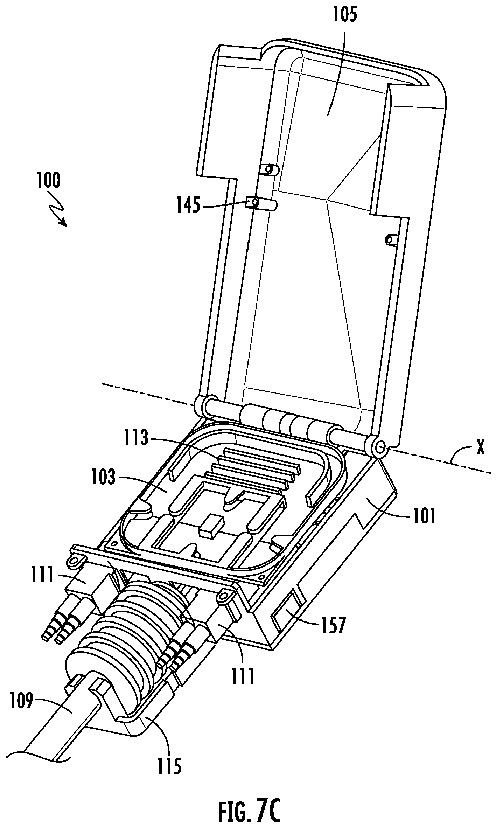

To access the fiber optic splices retained on the fiber optic splice tray 103, the fiber optic splice tray 103 must be released from lid 105. That is, the splice tray retaining features 141 must be disengaged from the lid retaining features 145. In particular, fiber optic splice tray is moved in the direction of arrow A to disengage the fiber optic splice tray 103 from lid retaining features 145 as shown in Figure 7B. Once this is done, the fiber optic splice tray 103 is free to pivot about axis X of hinges 107a and 107b independently from lid 105 along the direction of arrow A. The fiber optic splice tray 103 can then be pivoted about axis X so that it is in the position illustrated in Figure 7C. With the fiber optic splice tray 103 in this position, a user can access the first side and the splice region 113 thereon. On the other hand, when in this position, the region 161 inside the base portion 101 is less accessible or even inaccessible and that other fiber optic components cannot be accessed as easily or at all, such as the fiber optic connector adapters 111.

Figure 7A to 7C illustrate the fiber optic outlet 100 in a configuration with two fiber optic connector adapters 111 and a fiber optic duct 109 attached via the duct cable fixing 115. The fiber optic duct 109 provides protection for an incoming fiber optic cable entering the fiber optic outlet 100. However, due to the size of the fiber optic duct 109, only two fiber optic connector adapters 111 can be used simultaneously. In this configuration, a fiber optic cable may enter the fiber optic outlet 100 through the fiber otpic duct 109. The individual optical fibers of the fiber optic cable may then be spliced to optical fibers terminating in a fiber optic connector, which may be inserted into one of the fiber optic connector adapters 111 (on an interface internal to the fiber optic outlet 100). This then enables connection to an external optical fiber by inserting the fiber optic connector of this optical fiber into the external interface of the fiber optic connector adapter 111.

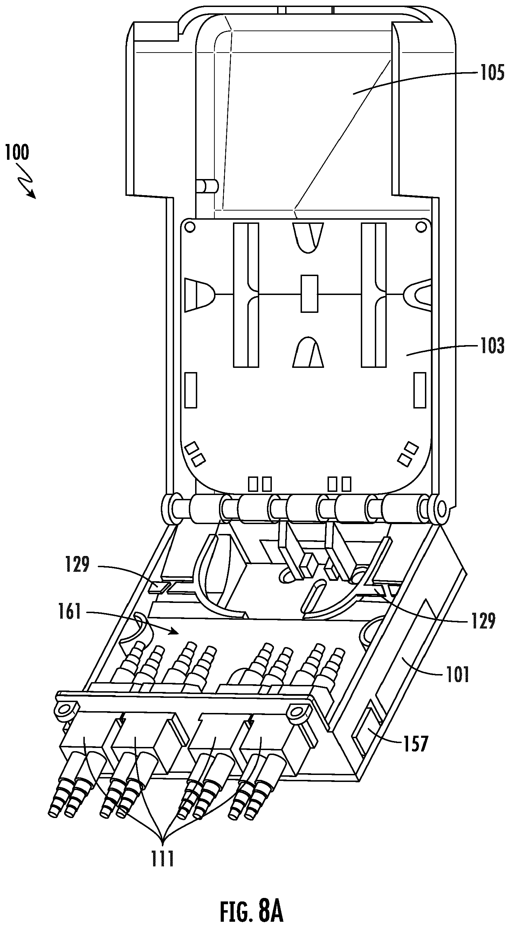

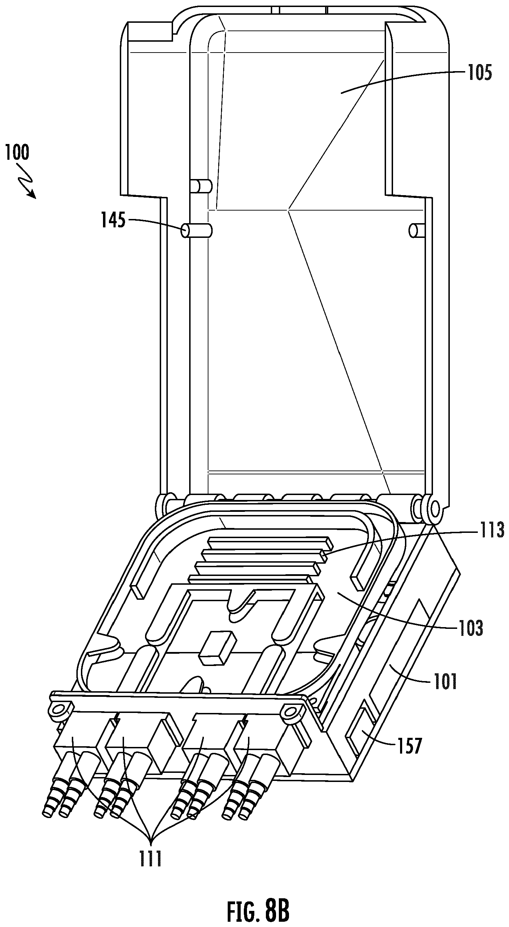

Figures 8A and 8B illustrate the fiber optic outlet 100 in a different configuration, with four fiber optic connector adapters 111. For example, the fiber optic connector adapters 111 may be SC adapters for connecting two optical fibers terminating in SC connectors or LC adapters for connecting two optical fibers terminating in LC connectors. In this configuration, a fiber optic cable may enter the fiber optic outlet 100 through the rear of the base portion 101, through opening 119, or a fiber optic cable may enter the fiber optic outlet 100 through the opening provided by removing removable wall portion 157. The individual optical fibers of the fiber optic cable may then be spliced to optical fibers terminating in a fiber optic connector, which may be inserted into one of the fiber optic connector adapters 111 (on an interface internal to the fiber optic outlet 100). This then enables connection to an external optical fiber by inserting the fiber optic connector of this optical fiber into the external interface of the fiber optic connector adapter 111. In this configuration, the duct cable fixing 115 has been removed from the base portion 101 of the fiber optic outlet 100.

Providing the fiber optic outlet 100 with the option to be configured in both ways (i.e., as in Figures 7A to 7C or as in Figures 8A and 8B) enables the fiber optic outlet 100 to be adaptable to many different needs and situations. In particular, providing for duct cable entry means that the fiber optic outlet 100 is suitable for retro-fitting old buildings (i.e., brownfield sites) with fiber optic connectivity, where no internal (to a wall) fittings can be installed.

As used herein, the terms "fiber-optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

It is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A fiber optic outlet comprising:
a base portion for mounting the fiber optic outlet;
a fiber optic splice tray pivotably attached to the base portion and comprising one or more splice tray retaining features; and
a lid pivotably attached to the base portion and comprising one or more lid retaining features;
wherein the splice tray and the lid are coaxially attached to the base portion; and
wherein the one or more splice tray retaining features and the one or more lid retaining features are configured to releasably retain the fiber optic splice tray against the lid such that, in use, when the lid is pivoted relative to the base portion the fiber optic splice tray is also pivoted relative to the base portion.

2. The fiber optic outlet of claim 1, wherein the one or more splice tray retaining features comprise one or more slots and the one or more lid retaining features comprises one or more latches.

3. The fiber optic outlet of claim 1, wherein the one or more splice tray retaining features comprise one or more latches and the one or more lid retaining features comprises one or more slots.

4. The fiber optic outlet of any preceding claim, wherein the one or more splice tray retaining features and the one or more lid retaining features each consist of two respective retaining features.

5. The fiber optic outlet of any preceding claim, wherein the fiber optic splice tray comprises a splice tray body having a first side and a second side, the first side comprising a splice region for retaining one or more fiber optic splices.

6. The fiber optic outlet of claim 5, wherein the lid releasably retains the fiber optic splice tray against the lid such that the first side of the splice tray body faces the lid.

7. The fiber optic outlet of claim 5 or 6, wherein the splice tray body further comprises one or more optical fiber overlength storage regions for retaining excess optical fiber.

8. The fiber optic outlet of claim 7, wherein the one or more optical fiber overlength storage regions are disposed on the first side of the splice tray body.

9. The fiber optic outlet of any of claims 5 to 7, wherein the splice tray body further comprises one or more guide channels configured to guide optical fibers from the base portion onto the first side of the splice tray.

10. The fiber optic outlet of claim 9, wherein the splice tray is attached to the base portion via a splice tray hinge; and
wherein the guide channels are configured such that, in use, optical fibers are guided from the base portion onto the first side of the splice tray at a location proximal to the splice tray hinge and in a direction parallel to the splice tray hinge.

11. The fiber optic outlet of any preceding claim wherein the base portion comprises one or more fiber optic cable entry regions, the one or more fiber optic cable entry regions comprising one or more duct cable fixings and/or one or more fiber optic connector adapters.

12. The fiber optic outlet of claim 11 wherein the one or more duct cable fixings are detachable from the base portion.

13. The fiber optic outlet of claim 11 or 12, wherein the lid is configured to extend beyond the base portion in a direction such that, when in use, the lid covers the one or more duct cable fixings and/or fiber optic connectors connected to the fiber optic connector adapters.

14. A fiber optic splice tray for use in a fiber optic outlet comprising a base portion and a lid pivotably mounted on the base portion, the fiber optic splice tray comprising:
a splice tray hinge for pivotably mounting the fiber optic splice tray onto the base portion coaxially with the lid; and
one or more splice tray retaining features for cooperating with a corresponding one or more lid retaining features of the lid to releasably retain the fiber optic splice tray against the lid such that, in use, when the lid is pivoted relative to the base portion the fiber optic splice tray is also pivoted relative to the base portion.

15. A lid for use in a fiber optic outlet comprising a base portion and a fiber optic splice tray pivotably mounted on the base portion, the lid comprising:
a lid hinge for pivotably mounting the lid onto the base portion coaxially with the splice tray; and
one or more lid retaining features for cooperating with a corresponding one or more splice tray retaining features of the fiber optic splice tray to releasably retain the fiber optic splice tray against the lid such that, in use, when the lid is pivoted relative to the base portion the fiber optic splice tray is also pivoted relative to the base portion.
